# FASCICULE DE BREVET EUROPEEN

(11) **EP 1 806 255 B1**
(45) Date de publication et mention de la délivrance du brevet: **29.07.2009**
(21) Numéro de dépôt: 06126647.4
(22) Date de dépôt: 20.12.2006
(51) Int. Cl.: B60J 7/20

(54) **Ensemble de support d'un panneau de coffre de véhicule automobile et véhicule automobile équipé d'un tel ensemble de support**
Befestigungseinheit eines Kofferraumdeckels für ein Kraftfahrzeug, und Kraftfahrzeug mit solch einer Befestigungseinheit
Support mechanism for an automobile boot lid and automobile equipped with such a support mechanism.

(30) Priorité: 04.01.2006 FR 0600062
(43) Date de publication de la demande: 11.07.2007
(73) Titulaire: Peugeot Citroën Automobiles S.A., 78140 Vélizy Villacoublay (FR)
(72) Inventeur: Michel, Thierry, 92700 Colombes (FR)

(56) Documents cités:
- DE-C1- 4 445 944
- JP-A- 2000 211 373
- JP-A- 2002 002 296

## Description

La présente invention concerne un ensemble de support d'un panneau de coffre de véhicule automobile, ainsi qu'un véhicule automobile équipé d'un tel ensemble de support d'un panneau de coffre.

On connaît les véhicules automobiles et plus particulièrement des véhicules automobiles de type coupé-cabriolet, qui comportent un toit escamotable constitué d'au moins deux éléments articulés entre eux, et destiné à être replié dans un compartiment ménagé à l'arrière du véhicule.

Les deux éléments du toit sont reliés entre eux par un système de biellettes et ils sont déplaçables par au moins un organe d'actionnement, comme par exemple un vérin, entre une position déployée de couverture de l'habitacle du véhicule automobile et une position escamotée à l'intérieur du coffre et dans laquelle les deux éléments sont repliés l'un sur l'autre.

A cet effet, le coffre comporte un compartiment dans lequel le toit vient se loger en position escamotée.

Le coffre comporte aussi un panneau de coffre qui, dans ce type de véhicule, est articulé à sa partie avant et également à sa partie arrière. Ainsi, ce panneau de coffre est déplaçable entre une position de fermeture du coffre et deux positions d'ouverture, l'une basculée vers l'arrière du véhicule pour le repliage du toit dans le compartiment et l'autre basculée vers l'avant du véhicule pour le rangement de bagages ou d'objets dans le coffre.

Pour cela, le panneau de coffre est lié à la structure du véhicule par l'intermédiaire d'un ensemble de support formé par un cadre qui se compose, d'une part, de deux montants latéraux s'étendant le long de chaque côté du compartiment du coffre du véhicule et, d'autre part, par un montant transversal arrière reliant les extrémités arrière des deux montants latéraux.

Ces montants latéraux comportent chacun une partie arrière courbée vers le bas et le montant transversal arrière se trouve positionné au niveau du bord supérieur du seuil de chargement du coffre. Pour permettre le basculement du panneau de coffre vers l'arrière du véhicule, le montant transversal arrière est associé à un mécanisme d'articulation du cadre sur la structure du véhicule, qui est disposé devant une poutre transversale arrière.

Ce mécanisme d'articulation se compose de bielles comportant une première extrémité reliée à la structure du véhicule par l'intermédiaire de la poutre transversale arrière et une seconde extrémité reliée au montant transversal arrière du cadre.

Afin d'éviter que le contenu du coffre vienne en appui contre le mécanisme d'articulation et pour dissimuler ce mécanisme d'articulation, un élément de garniture est disposé le long du montant transversal arrière du cadre supportant le panneau de coffre.

Cet élément de garniture se compose de deux parties, une première partie fixe formant une cloison verticale et une seconde partie mobile disposée en partie supérieure et solidaire de ce cadre.

Mais, cette configuration entraîne un inconvénient lors du basculement du panneau de coffre, notamment de l'avant vers l'arrière pour permettre le rangement du toit dans le compartiment du coffre, car la partie mobile de la garniture suit le basculement du montant arrière du cadre, ce qui peut occasionner des détériorations par pincement du contenu du coffre lorsque cet élément de garniture revient en position de fermeture.

L'invention a pour but de proposer un ensemble de support d'un panneau de coffre de véhicule automobile, qui évite, par des moyens simples et peu onéreux, ces inconvénients.

L'invention a donc pour objet un ensemble de support d'un panneau de coffre de véhicule automobile comportant un coffre délimité, à sa partie inférieure, par un plancher, ledit ensemble comprenant un cadre formé par un montant arrière s'étendant transversalement par rapport à l'axe longitudinal du véhicule et reliant les extrémités arrière de deux montants latéraux s'étendant parallèlement à la cet axe et présentant chacun une portion avant sensiblement horizontale et une portion arrière inclinée vers le plancher, le montant arrière comportant des moyens d'articulation sur une poutre arrière transversale pour le basculement du panneau de coffre entre une position de fermeture du coffre et une position relevée vers l'arrière du véhicule, la portion arrière de chacun desdits montants latéraux présentant une longueur suffisante pour placer le montant arrière au plus près du plancher.

Ces caractéristiques sont divulguées par le document JP 2000-211373.

L'ensemble de support selon l'invention se caractérise en ce que les moyens d'articulation comprennent au moins un mécanisme de pivotement (30) formé par au moins une bielle (31, 32) de forme concave incurvée vers le plancher (11).

Selon d'autres caractéristiques de l'invention :
- une première extrémité de ladite au moins bielle est articulée sur le montant arrière et une seconde extrémité de ladite au moins bielle est articulée sur la poutre transversale,
- ledit au moins mécanisme de pivotement comprend deux bielles de forme concave incurvée vers le plancher, et
- les moyens d'articulation et le montant arrière sont placés dans le logement transversal de volume restreint délimité par une garniture de seuil fixe, solidaire du plancher et par la poutre transversale.

L'invention a également pour objet un véhicule automobile, du type comprenant notamment un panneau de coffre, caractérisé en ce que le panneau de coffre est associé à un ensemble de support tel que précédemment mentionné.

Selon d'autres caractéristiques du véhicule de l'invention :
- le véhicule automobile est un véhicule de type coupé-cabriolet,
- il comprend une garniture de seuil liée à une garniture du fond du compartiment de coffre, de sorte à former une pièce monobloc, et
- la garniture de seuil est solidaire du plancher de coffre.

Les caractéristiques et avantages de l'invention apparaîtront au cours de la description qui va suivre, donnée à titre d'exemple et faite en référence aux dessins annexés, sur lesquels :
- la Fig. 1 est une vue schématique en coupe longitudinale d'un véhicule automobile, notamment de type coupé-cabriolet, équipé d'un ensemble de support d'un panneau de coffre conforme à l'invention, dans la configuration de type coupé,
- la Fig. 2 est une vue schématique en coupe longitudinale du véhicule automobile avec le panneau de coffre en position basculée vers l'arrière du véhicule pour permettre le pivotement du toit dans le compartiment de coffre,
- la Fig. 3 est une vue schématique en coupe longitudinale du véhicule automobile en configuration de type cabriolet avec le panneau de coffre basculé vers l'avant pour permettre l'accessibilité au compartiment de coffre,
- la Fig. 4 est une vue schématique en perspective de l'ensemble de support du panneau de coffre,
- la Fig. 5 est une vue schématique en coupe transversale d'un mécanisme de pivotement du cadre de l'ensemble de support dans la position de fermeture du panneau de coffre, et
- la Fig. 6 une vue schématique en coupe transversale du mécanisme de pivotement du cadre de l'ensemble de support dans la position basculée vers l'arrière du panneau de coffre.

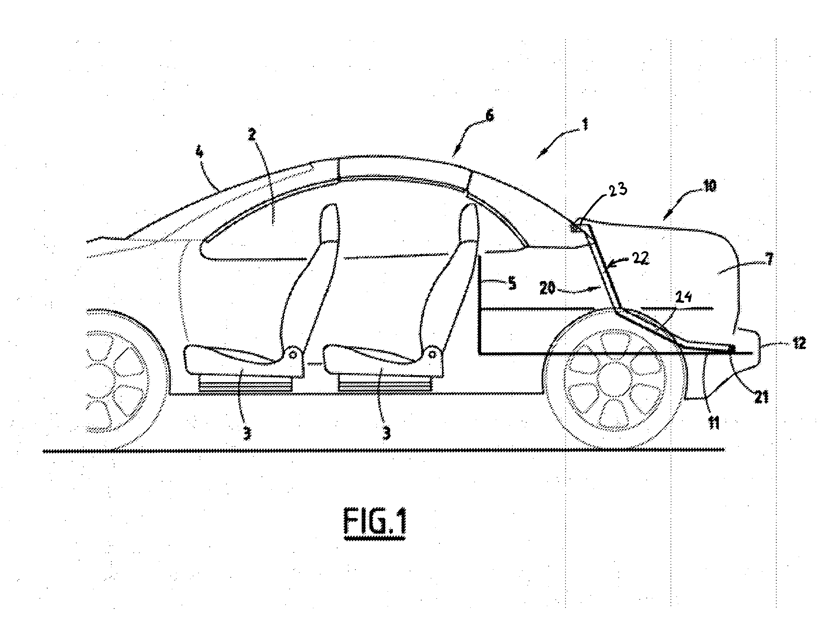

Sur la Fig. 1, on a représenté schématiquement un véhicule automobile de type coupé-cabriolet, désigné dans son ensemble par la référence 1, et qui comporte un habitacle 2 équipé de deux rangées de sièges 3.

Dans la description qui suit, les éléments situés le plus près de l'avant du véhicule, seront associés au terme "avant" et les éléments situés le plus près de la partie arrière du véhicule seront associés au terme "arrière".

De manière classique, l'habitacle 2 est délimité par différents éléments de carrosserie et de structure de véhicule et notamment à sa partie avant, par un pare-brise 4 et, à sa partie arrière, par une paroi transversale 5 et, à sa partie supérieure, par un toit escamotable 6. Le véhicule automobile 1 comporte également une partie arrière comprenant un compartiment de coffre 7 délimité, à sa partie supérieure, par un panneau de coffre 10, à sa partie inférieure, par un plancher 11 et, à sa partie arrière, par une poutre de pare-chocs 12.

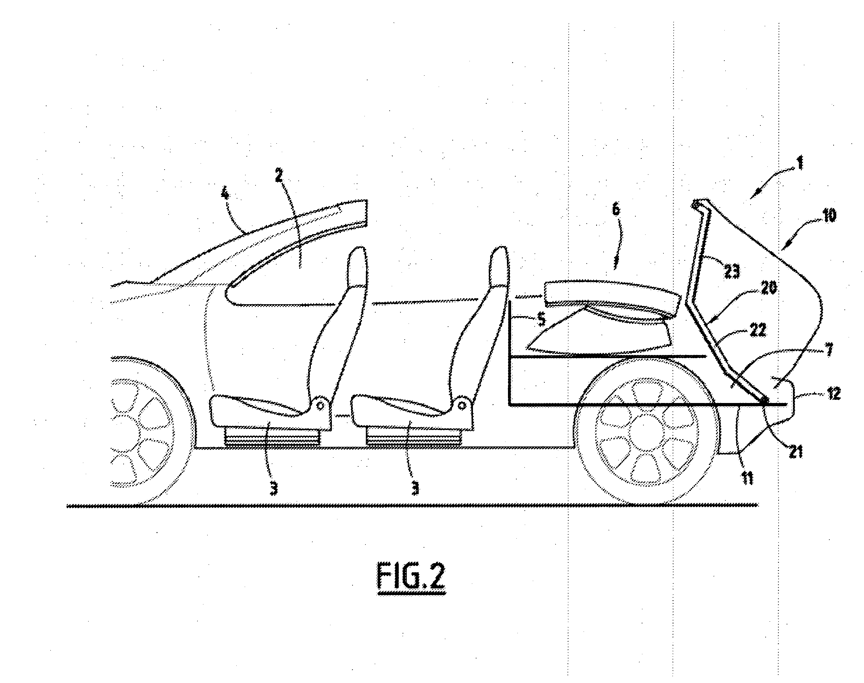

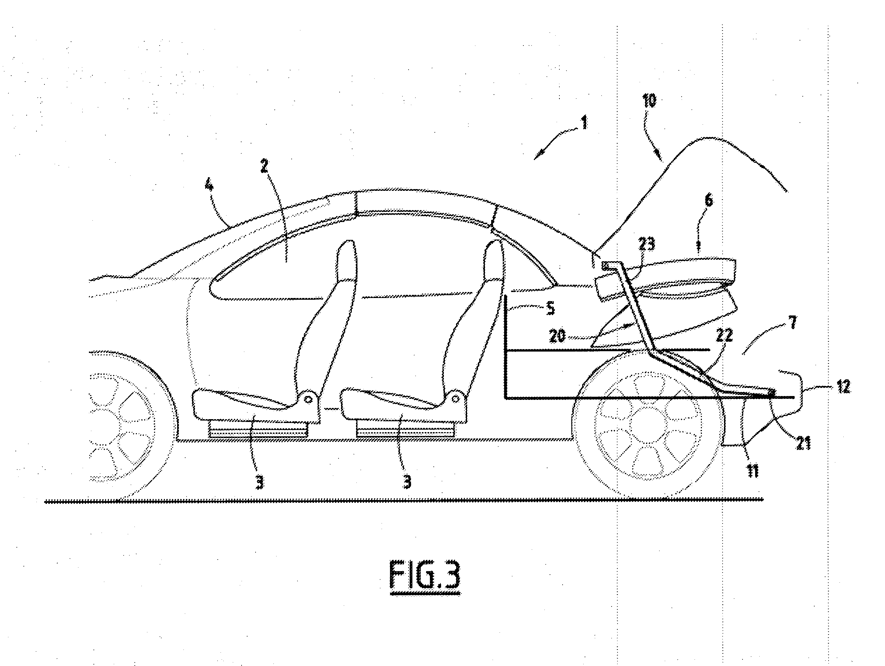

Le toit 6 est déplaçable entre une position déployée de fermeture de l'habitacle, représentée à la Fig. 1 et une position escamotée à l'intérieur du compartiment de coffre 7, représentée aux Figs. 2 et 3.

Le panneau de coffre 10 est relié à la structure de la caisse du véhicule automobile par l'intermédiaire d'un ensemble de support formé par un cadre désigné par la référence générale 20.

Le panneau de coffre 10 est déplaçable entre une position de fermeture du compartiment de coffre 7 représentée à la Fig. 1, une position d'ouverture basculée avec le cadre 20 vers l'arrière du véhicule pour permettre le déplacement du toit 6 dans le compartiment du coffre 7, ainsi que montrée à la Fig. 2, et une position d'ouverture basculée indépendamment du cadre 20 vers l'avant du véhicule pour permettre l'accès au compartiment du coffre, comme montrée à la Fig. 3.

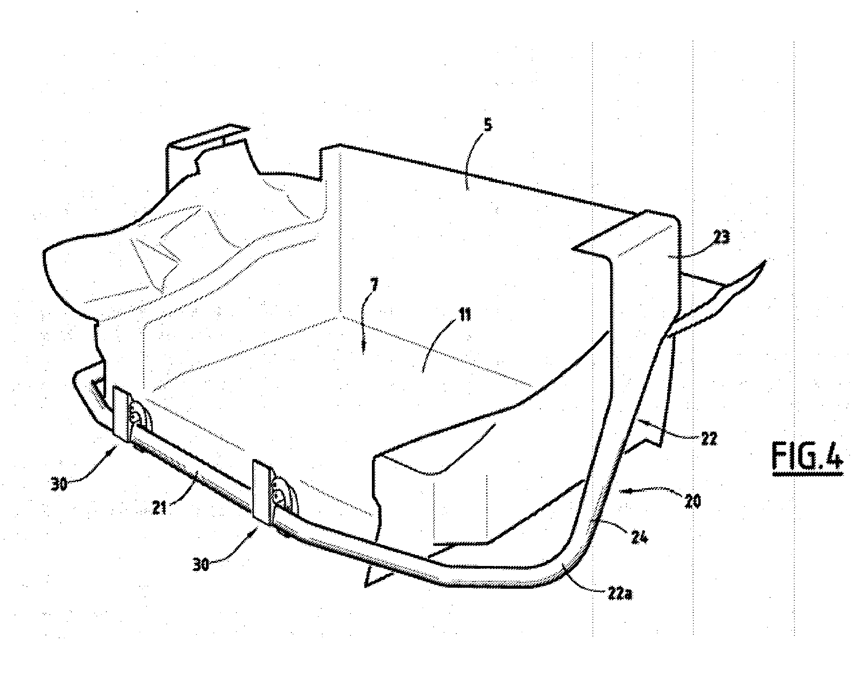

En se reportant maintenant aux Figs.4 à 6, on va décrire le cadre 20 de l'ensemble de support du panneau de coffre 10.

Ainsi que montré à la Fig. 4, le cadre 20 comprend un montant arrière 21 s'étendant transversalement par rapport à l'axe longitudinal du véhicule et reliant les extrémités arrière 22a de deux montants latéraux 22 s'étendant parallèlement à cet axe longitudinal. Les montants latéraux 22 sont situés de part et d'autre du compartiment de coffre 7.

Chaque montant latéral 22 se compose d'une portion avant 23 sensiblement horizontale portant un mécanisme, non représenté, d'articulation du panneau de coffre 10 pour permettre à ce panneau de coffre 10 de se déplacer ente la position de fermeture (Fig. 1) et la position de basculement vers l'avant du véhicule (Fig. 3) pour l'accès au compartiment de coffre (7).

Dans cette position, le cadre 20 reste verrouillé sur la structure de la caisse du véhicule.

Chaque montant latéral 22 comprend également une portion arrière 24 inclinée vers le plancher 11 du véhicule et qui présente une longueur suffisante pour placer le montant arrière 21 au plus près de ce plancher 11, ainsi que montré à la Fig. 4.

Le montant arrière 22 est pourvu de moyens d'articulation sur la poutre de pare-chocs 12 transversale pour permettre le basculement du panneau de coffre 10 entre une position de fermeture du coffre 7 (Fig. 1) et une position relevée vers l'arrière du véhicule (Fig. 2) pour permettre le repliage ou le déploiement du toit 10.

Les moyens d'articulation comprennent au moins un mécanisme de pivotement désigné par la référence générale 30 et, de préférence, de deux mécanismes de pivotement 30 disposés de part et d'autre de l'axe longitudinal du véhicule automobile.

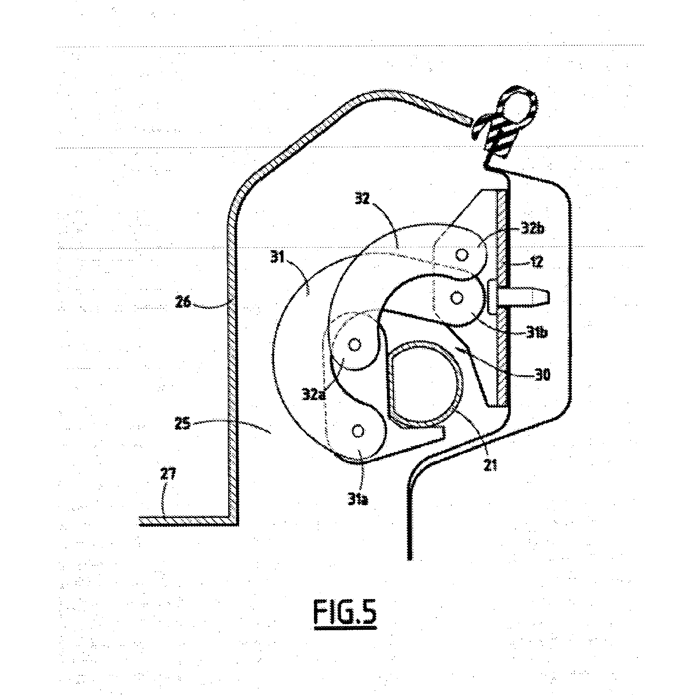

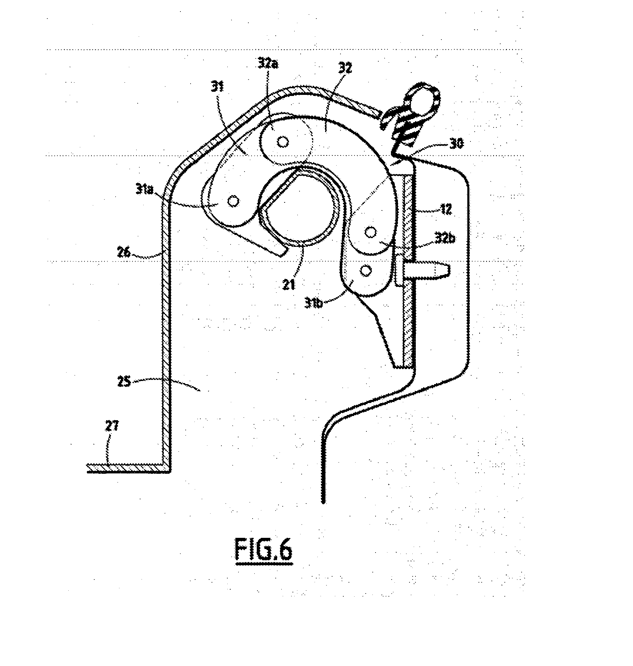

Comme montré plus particulièrement sur les Figs. 5 et 6, l'ensemble formé par le montant arrière 21 et les mécanismes d'articulation 30 est disposé dans un logement transversal 25 limité, à sa partie avant, par une garniture de seuil 26 du compartiment de coffre 7 et, à sa partie arrière, par la poutre de pare-chocs 12 transversale.

Le logement 25 présente un volume restreint et la garniture de seuil 26 est monobloc avec la garniture 27 du fond du compartiment de coffre 7 et est solidaire du plancher de coffre 11.

Chaque mécanisme de pivotement 30 est formé par au moins une bielle de forme concave incurvée vers le plancher 11.

Dans l'exemple de réalisation représenté sur les Figs. 5 et 6, chaque mécanisme de pivotement 30 est formé par deux bielles, respectivement 31 et 32 de forme concave incurvée vers le plancher 11.

La première bielle 31 comporte une première extrémité 31a articulée sur le montant arrière 21 du cadre 20 et une seconde extrémité 31 b articulée sur la poutre de pare-chocs 12 et la seconde bielle 32 comporte une première extrémité 32a articulée sur le montant arrière 21 et une seconde extrémité 32b articulée sur la poutre de pare-chocs 12.

Ainsi, lors du basculement du panneau de coffre 10 de sa position de fermeture du compartiment de coffre 7 vers sa position basculée vers l'arrière du véhicule, les deux bielles 31 et 32 de chaque mécanisme de pivotement 30 pivotent autour de leurs extrémités 31 b et 32b, ainsi que montré à la Fig. 6, de telle sorte que le montant arrière 21 du cadre 20 vienne se loger à l'intérieur des deux bielles 31 et 32 par pivotement autour des extrémités 31 a et 32a de ces bielles, ainsi que montré à la Fig. 6.

Ainsi, grâce à cette disposition, la garniture de seuil du compartiment de coffre est fixe lors de l'ouverture du panneau de coffre 10 ce qui évite le pincement du contenu du coffre lorsque la garniture revient en position de fermeture.

## Revendications

1. Ensemble de support d'un panneau de coffre (10) de véhicule automobile comportant un coffre (7) délimité, à sa partie inférieure, par un plancher (11), ledit ensemble comprenant un cadre (20) formé par un montant arrière (21) s'étendant transversalement par rapport à l'axe longitudinal du véhicule et reliant les extrémités arrière (22a) de deux montants latéraux (22) s'étendant parallèlement à la cet axe et présentant chacun une portion avant (23) sensiblement horizontale et une portion arrière (24) inclinée vers le plancher (11), le montant arrière (21) comportant des moyens d'articulation sur une poutre arrière (12) transversale pour le basculement du panneau de coffre (10) entre une position de fermeture du coffre (7) et une position relevée vers l'arrière du véhicule, ledit ensemble de support étant **caractérisé en ce que** la portion arrière (24) de chacun desdits montants latéraux (22) présentant une longueur suffisante pour placer le montant arrière (21) au plus près du plancher (11), et **en ce que** les moyens d'articulation comprennent au moins un mécanisme de pivotement (30) formé par au moins une bielle (31, 32) de forme concave incurvée vers le plancher (11).

2. Ensemble de support selon la revendication 1, **caractérisé en ce qu'**une première extrémité (31 a, 32a) de ladite au moins bielle (31 ; 32) est articulée sur le montant arrière (21) et une seconde extrémité (31 b, 32b) de ladite au moins bielle (31, 32) est articulée sur la poutre transversale (12).

3. Ensemble de support selon la revendication 1 ou 2, **caractérisé en ce que** ledit au moins mécanisme (30) de pivotement comprend deux bielles (31, 32) de forme concave incurvée vers le plancher (11).

4. Ensemble de support selon l'une quelconque des revendications 1 à 3, **caractérisé en ce que** les moyens d'articulation (30) et le montant arrière (21) sont placés dans le logement (25) transversal de volume restreint délimité par une garniture de seuil (26) fixe, solidaire du plancher (11) et par la poutre transversale (12).

5. Véhicule automobile du type comprenant un panneau de coffre (10), **caractérisé en ce que** le panneau de coffre (10) est associé à un ensemble de support selon l'une quelconque des revendications 1 à 4.

6. Véhicule automobile selon la revendication 5, **caractérisé en ce que** le véhicule est un véhicule de type coupé-cabriolet.

7. Véhicule automobile selon la revendication 5 ou 6, **caractérisé en ce qu'**il comprend une garniture de seuil (26) liée à une garniture (27) du fond du compartiment de coffre (7), de sorte à former une pièce monobloc.

8. Véhicule automobile selon la revendication 7, **caractérisé en ce que** la garniture de seuil (26) est solidaire du plancher de coffre.

## Claims

1. Support mechanism for the boot lid (10) of a motor vehicle comprising a boot (7) delimited, at its lower part, by a floor (11), the said mechanism comprising a frame (20) formed of a rear member (21) running transversely with respect to the longitudinal axis of the vehicle and connecting the rear ends (22a) of two side members (22) running parallel to this axis and each having a substantially horizontal front portion (23) and a rear portion (24) that is inclined towards the floor (11), the rear member (21) comprising means of articulation to a transverse rear beam (12) for pivoting the boot lid (10) between a position in which it closes the boot (7) and a position lifted up towards the rear of the vehicle, the said support mechanism being **characterized in that** the rear portion (24) of each of the said side members (22) is long enough that the rear member (21) can be placed as close as possible to the floor (11) and **in that** the means of articulation comprise at least one pivot mechanism (30) formed of at least one link rod (31, 32) of concave shape curved towards the floor (11).

2. Support mechanism according to Claim 1,
**characterized in that** a first end (31a, 32a) of the said at least one link rod (31; 32) is articulated to the rear member (21) and a second end (31b, 32b) of the said at least one link rod (31, 32) is articulated to the transverse beam (12).

3. Support mechanism according to Claim 1 or 2,
**characterized in that** the said at least one pivot mechanism (30) comprises two link rods (31, 32) of concave shape curved towards the floor (11).

4. Support mechanism according to any one of Claims 1 to 3, **characterized in that** the means of articulation (30) and the rear member (21) are placed in a transverse housing (25) of restricted volume delimited by a fixed sill trim (26) secured to the floor (11) and by the transverse beam (12).

5. Motor vehicle of the type comprising a boot lid (10), **characterized in that** the boot lid (10) is associated with a support mechanism according to any one of claims 1 to 4.

6. Motor vehicle according to Claim 5, **characterized in that** the vehicle is a vehicle of the coup6-cabriolet type.

7. Motor vehicle according to Claim 5 or 6, **characterized in that** it comprises a sill trim (26) connected to a trim (27) lining the bottom of the boot compartment (7) so as to form a one-piece assembly.

8. Motor vehicle according to Claim 7, **characterized in that** the sill trim (26) is secured to the floor of the boot.

## Patentansprüche

1. Befestigungseinheit für einen Kofferraumdeckel (10) eines Kraftfahrzeugs, das einen Kofferraum (7) aufweist, der in seinem unteren Teil durch einen Fußboden (11) begrenzt ist, wobei die Einheit einen Rahmen (20) aufweist, der aus einem hinteren Pfosten (21), der sich in Bezug zu der Längsachse des Fahrzeugs quer erstreckt und die hinteren Enden (22a) von zwei seitlichen Pfosten (22) verbindet, die sich parallel zu dieser Achse erstrecken und jeweils einen im Wesentlichen horizontalen Vorderabschnitt (23) und einen zu dem Fußboden (11) geneigten Hinterabschnitt (24) aufweisen, gebildet ist, wobei der hintere Pfosten (21) Mittel zum Anlenken auf einem hinteren Querbalken (12) zum Kippen des Kofferraumdeckels (10) zwischen einer Schließposition des Kofferraums (7) und einer zur Rückseite des Fahrzeugs hin angehobenen Position aufweist, wobei die Befestigungseinheit **dadurch gekennzeichnet ist, dass** der Hinterabschnitt (24) jedes der seitlichen Pfosten (22) eine Länge aufweist, die ausreicht, um den hinteren Pfosten (21) so nahe wie möglich am Fußboden (11) zu platzieren, und dass die Anlenkmittel mindestens einen Schwenkmechanismus (30) aufweisen, der aus mindestens einem Pleuel (31, 32) mit konkaver, zum Fußboden (11) in gebogener Form besteht.

2. Befestigungseinheit nach Anspruch 1, **dadurch gekennzeichnet, dass** ein erstes Ende (31a, 32a) des mindestens einen Pleuels (31; 32) auf dem hinteren Pfosten (21) angelenkt ist, und dass ein zweites Ende (31b, 32b) des mindestens einen Pleuels (31, 32) auf dem Querbalken (12) angelenkt ist.

3. Befestigungseinheit nach Anspruch 1 oder 2, **dadurch gekennzeichnet, dass** der mindestens eine Schwenkmechanismus (30) zwei Pleuel (31, 32) mit konkaver, zum Fußboden (11) hin gebogener Form aufweist.

4. Befestigungseinheit nach einem der Ansprüche 1 bis 3, **dadurch gekennzeichnet, dass** die Anlenkmittel (30) und der hintere Pfosten (21) in der Queraufnahme (25) mit beschränktem Volumen, die durch ein stationäres Schwellenfutter (26), das fest mit dem Fußboden (11) und durch den Querbalken (12) verbunden ist, platziert sind.

5. Kraftfahrzeug des Typs, das einen Kofferraumdeckel (10) aufweist, **dadurch gekennzeichnet, dass** der Kofferraumdeckel (10) mit einer Befestigungseinheit nach einem der Ansprüche 1 bis 4 verbunden ist.

6. Kraftfahrzeug nach Anspruch 5, **dadurch gekennzeichnet, dass** das Fahrzeug ein Fahrzeug des Typs Coupe-Kabriolett ist.

7. Kraftfahrzeug nach Anspruch 5 oder 6, **dadurch gekennzeichnet, dass** es ein Bodenfutter (26) aufweist, das mit einem Futter (27) des Bodens des Kofferraums (7) verbunden ist, so dass ein einteiliges Stück gebildet wird.

8. Kraftfahrzeug nach Anspruch 7, **dadurch gekennzeichnet, dass** das Bodenfutter (26) fest mit dem Fußboden des Kofferraums verbunden ist.
